# FASCICULE DE BREVET EUROPEEN

(11) **EP 1 872 043 B1**
(45) Date de publication et mention de la délivrance du brevet: **15.02.2012**
(21) Numéro de dépôt: 06743689.9
(22) Date de dépôt: 13.04.2006
(51) Int. Cl.: F16L 27/08, F16L 23/032, F16L 23/028

(54) **RACCORD TUBULAIRE A ANGLE VARIABLE**
RÖHRENFÖRMIGE VERBINDUNG MIT VARIABLEM WINKEL
TUBULAR CONNECTION WITH VARIABLE ANGLE

(30) Priorité: 18.04.2005 FR 0503856
(43) Date de publication de la demande: 02.01.2008
(73) Titulaire: Saint-Gobain PAM, 54000 Nancy (FR)
(72) Inventeur: VITEL, Jean-Pierre, F-54470 Thiaucourt-regnieville (FR); GROJEAN, Daniel, F-54200 Bouvron (FR); RENARD, Philippe, F-54710 Fleville (FR)
(74) Mandataire: Domenego, Bertrand
(86) Numéro de dépôt international: PCT/FR2006/000815
(87) Numéro de publication internationale: WO 2006/111638

(56) Documents cités:
- WO-A-99/22172
- AU-A- 4 896 369
- DE-C- 358 329
- FR-A- 1 469 425
- FR-A- 2 830 070
- GB-A- 2 161 234

## Description

La présente invention concerne un raccord tubulaire à angle variable selon le preambule de la revendication 1.

Une jonction tubulaire à angle variable du type précité est connue du document AU-A-4896369.
On connaît par ailleurs du document FR-A-1,469,425 un raccord tubulaire à angle variable comprenant un premier tronçon tubulaire et un second tronçon tubulaire, dont chacun comporte une collerette terminale. Le raccord tubulaire comporte en outre deux brides coulissantes qui sont des pièces séparées des collerettes et qui sont adaptées pour serrer les collerettes l'une contre l'autre au moyen de boulons. Ce raccord comporte un grand nombre de pièces constitutives, et est en conséquence difficile à fabriquer et coûteux à assembler.

L'invention a pour but de fournir un raccord tubulaire à angle variable qui soit économique à fabriquer, facile à assembler, et qui assure une étanchéité fiable tout en permettant une variation angulaire continue ainsi que diverses possibilités de raccordement aux extrémités libres du raccord.

A cet effet, l'invention a pour objet un raccord tubulaire du type précité, caractérisé par les caractéristiques de la revendication 1.

Selon des modes particuliers de réalisation, le raccord tubulaire selon l'invention comporte l'une ou plusieurs des caractéristiques suivantes :
- l'extrémité libre comporte en outre une seconde butée disposée entre la première série d'ergots et la collerette ou la bride d'extrémité, notamment une seconde série d'ergots alignés circonférentiellement avec les ergots de la première série d'ergots ;
- le raccord tubulaire comporte une configuration alignée dans laquelle les premier et second axes sont confondus et une configuration coudée dans laquelle les premier et second axes sont sécants ;
- les moyens de serrage comportent au moins un segment de liaison adapté pour s'appliquer contre une surface de la collerette tournée à l'opposé de la bride d'extrémité et au moins un organe de serrage, notamment une vis, adapté pour serrer le ou chaque segment de liaison contre la collerette, la bride d'extrémité comportant des orifices traversants, à travers lesquels s'étendent les organes de serrage, et la bride d'extrémité étant fixée au second tronçon tubulaire, et étant notamment solidaire du second tronçon tubulaire, et le ou chaque organe de serrage s'étendant radialement entièrement à l'extérieur de la collerette par rapport à l'axe de rotation ;
- la bride d'extrémité a une forme polygonale, notamment hexagonale ;
- le ou chaque segment de liaison a une forme de polygone partiel complémentaire de la forme polygonale de la bride d'extrémité ;
- le ou chaque segment de liaison a une épaisseur qui est supérieure à l'épaisseur de paroi de la bride d'extrémité ;
- la bride d'extrémité comporte une jupe entourant au moins partiellement les moyens de serrage et la collerette ;
- le raccord tubulaire comporte des moyens d'affichage adaptés pour indiquer la position relative entre les premier et second axes centraux ;
- les moyens d'affichage sont formés par une échelle fixe par rapport au second tronçon tubulaire et un organe indicateur fixé au premier tronçon tubulaire ;
- le raccord tubulaire comporte une garniture d'étanchéité disposée entre le premier tronçon tubulaire et le second tronçon tubulaire, et il comporte une première butée adaptée pour limiter la compression de la garniture d'étanchéité ;
- le premier tronçon tubulaire comporte une nervure de guidage coaxiale au premier axe central, et le second tronçon tubulaire comporte un épaulement complémentaire à la nervure de guidage et recevant celle-ci ; et
- le raccord tubulaire comporte une poignée de préhension et la bride d'extrémité comporte un bord rectiligne qui est situé, radialement par rapport au second axe central, à l'opposé de la poignée de préhension.

L'invention sera mieux comprise à la lecture de la description qui va suivre, donnée uniquement à titre d'exemple et faite en se référant aux dessins annexés, sur lesquels :
- la Figure 1 est une vue en perspective d'un raccord tubulaire à angle variable selon l'invention, dans une configuration coudée ;
- la Figure 2 est une vue de côté du raccord tubulaire selon l'invention, dans une configuration alignée, assemblé à des éléments de canalisation adjacents ;
- la Figure 3 est une vue en coupe selon la ligne III-III de la Figure 2 ;
- la Figure 4 est une coupe longitudinale de la Figure 2 ;
- la Figure 5 montre le raccord de la Figure 2 selon l'axe central du tronçon mâle;
- la Figure 6 est une vue en perspective d'une bride de montage adaptée pour être utilisée avec le raccord tubulaire selon l'invention ;

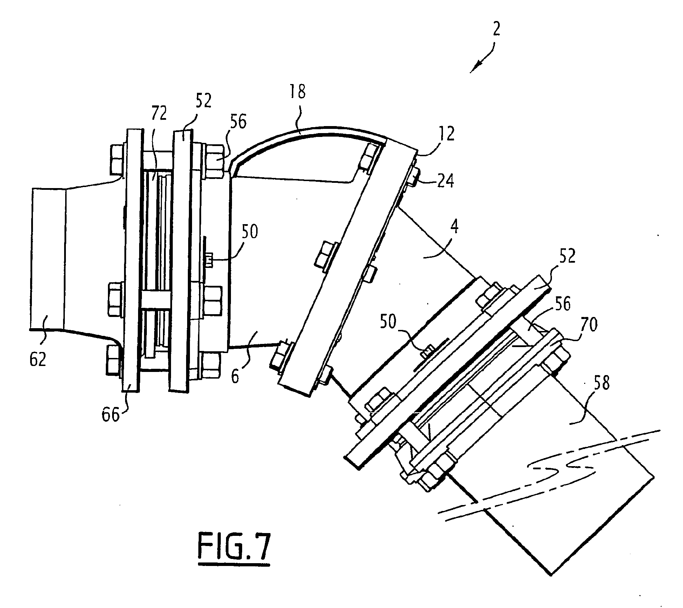

- la Figure 7 est une vue de côté du raccord tubulaire à l'état monté dans une configuration coudée ; et

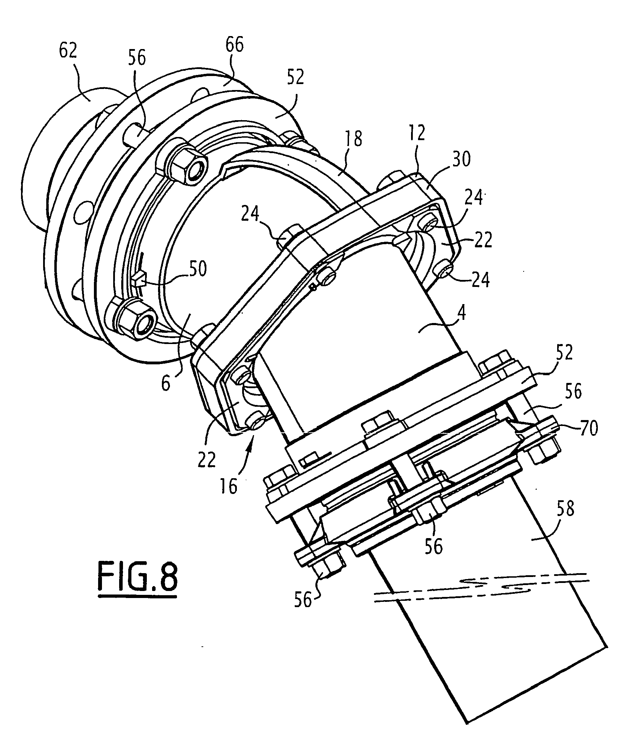

- la Figure 8 est une vue en perspective de l'ensemble de la Figure 7.

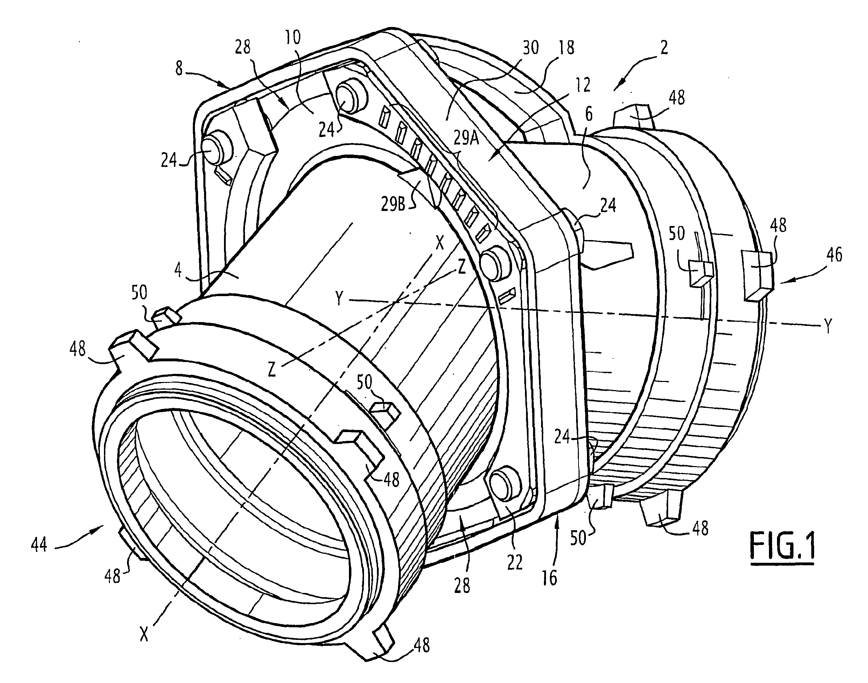

Sur la Figure 1 est représenté un raccord tubulaire à angle variable selon l'invention, désigné par la référence générale 2.

Le raccord tubulaire 2 comprend un premier tronçon tubulaire qui est un tronçon 4 mâle, un second tronçon tubulaire qui est un tronçon 6 femelle, ainsi que des moyens de serrage 8 adaptés pour serrer le premier tronçon 4 contre le second tronçon 6. Les tronçons tubulaires 4 et 6 sont réalisés en un matériau rigide, notamment en fonte.

Le premier tronçon tubulaire 4 définit un premier axe central X-X et comporte une collerette circulaire 10 qui est oblique par rapport à l'axe central X-X en formant un angle de 22,5° avec cet axe. Le second tronçon tubulaire 6 définit un second axe central Y-Y et comporte une bride d'extrémité 12 qui est oblique par rapport à l'axe central Y-Y en formant un angle de 22,5° avec cet axe. La bride d'extrémité 12 est fixée au second tronçon tubulaire 6 et est notamment solidaire de ce tronçon tubulaire 6. Comme on le voit sur la Figure 1, la bride d'extrémité 12 a une forme polygonale, en l'occurrence hexagonale, formant un bord rectiligne 16.

La collerette 10 et la bride d'extrémité 12 sont appliquées l'une sur l'autre et forment ensemble un axe de rotation Z-Z. Le tronçon tubulaire 4 et le tronçon tubulaire 6 peuvent être tournés l'un par rapport à l'autre sans restrictions autour de l'axe de rotation Z-Z, modifiant ainsi l'angle d'inclinaison des axes X-X et Y-Y l'un par rapport à l'autre entre des angles relatifs compris entre 0° et 45°, et permettant d'atteindre toute position angulaire comprise dans cette plage.

Le tronçon tubulaire 6 comporte en outre une poignée de préhension 18 qui est fixée d'une part à la bride d'extrémité 12, et d'autre part à la partie courante du second tronçon tubulaire 6. La poignée de préhension 18 est située du côté opposé du bord rectiligne 16, de telle sorte que, lorsque le raccord tubulaire 2 est posé sur le sol, la poignée 18 s'étend vers le haut. Ceci facilite la préhension du raccord 2.

En outre, des orifices traversants 20 sont ménagés dans la bride d'extrémité 12 et s'étendent parallèlement à l'axe de rotation Z-Z.

Les moyens de serrage 8 comportent deux segments de liaison 22, réalisés en un matériau rigide, par exemple en fonte, et adaptés pour s'appliquer contre la surface de la collerette 10 tournée à l'opposé de la bride d'extrémité 12, ainsi que des vis de serrage 24, adaptées pour serrer les deux segments de liaison 22 contre la collerette 10. On peut également envisager de remplacer les vis 24 par des boulons, mais il est alors nécessaire d'utiliser deux clés de serrage.

Les vis de serrage 24 s'étendent à travers les orifices 20 et sont vissées dans des taraudages 26 des segments de liaison 22. Les vis de serrage 24 s'étendent radialement entièrement à l'extérieur de la collerette 10 par rapport à l'axe de rotation Z-Z, permettant ainsi une rotation relative sans restrictions de la collerette 10 et de la bride d'extrémité 12 de 360° autour de l'axe de rotation Z-Z.

Chaque segment de liaison 22 a une forme générale de polygone partiel qui est complémentaire de la forme polygonale de la bride d'extrémité 12. En outre, entre les deux segments de liaison 22 subsistent deux interstices 28, ce qui permet un gain de matière et contribue à réduire le poids du raccord tubulaire 2.

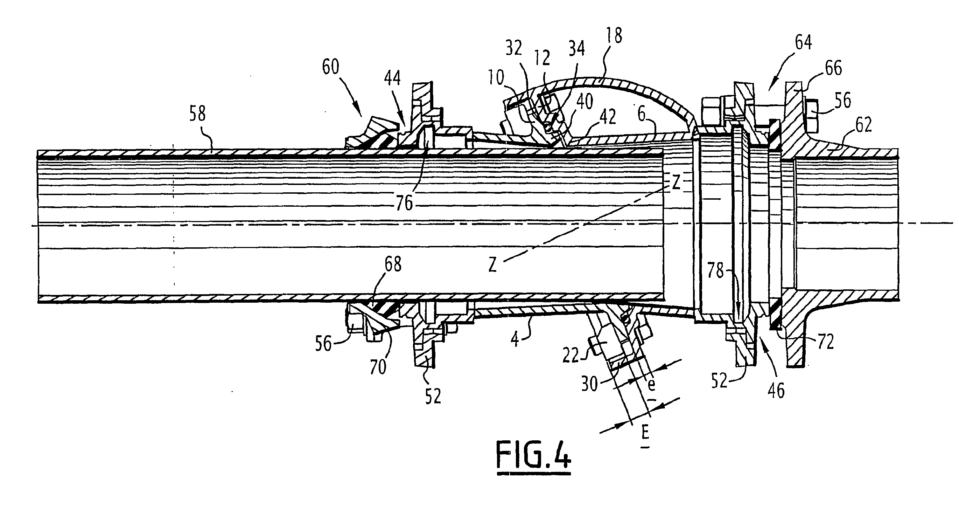

En se référant plus particulièrement à la Figure 4, on voit que les segments de liaison 22 ont une épaisseur E, mesurée selon la direction de l'axe de rotation Z-Z, qui est supérieure à une épaisseur e, mesurée selon l'axe de rotation Z-Z, de la bride d'extrémité 12. Ces caractéristiques conduisent à une rigidité importante de la liaison tout en limitant le poids du raccord.

Avantageusement, les segments de liaison 22 présentent du côté du tronçon mâle 4 une graduation ou échelle 29A qui, en combinaison avec un repère fixe 29B solidaire du tronçon mâle 4 permet de réaliser un réglage angulaire précis.

Par ailleurs, la bride d'extrémité 12 comporte une jupe hexagonale 30 qui entoure les segments de liaison 22 et la collerette 10. La jupe 30 recouvre axialement au moins partiellement les segments de liaison 22 et la collerette 10, servant ainsi de butée aux segments 22. De plus, cette jupe 30 protège les segments de liaison 22 et la collerette 10 de salissures et rigidifie la bride d'extrémité 12.

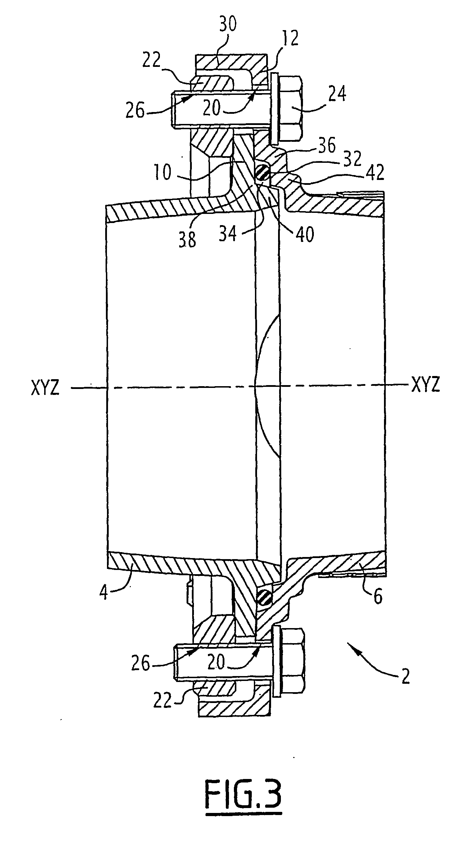

Comme ceci est visible sur la Figure 3, le raccord à angle variable 2 comporte en outre une garniture d'étanchéité 32 torique réalisée en matière élastomère, et disposée entre la bride d'extrémité 12 et la collerette 10 (voir Figures 3 et 4). La garniture d'étanchéité 32 est emprisonnée dans un logement 34 délimité par un premier épaulement interne 36 de la bride d'extrémité 12 et par un épaulement externe 38 qui relie la collerette 10 à la tranche d'extrémité 40 du tronçon mâle 4, empêchant ainsi tout risque d'expulsion de la garniture d'étanchéité 32.

Le logement 34 dans lequel la garniture d'étanchéité 32 est enfermée permet également de maîtriser la compression de l'élastomère de la garniture 32 grâce au contact métallique en fin de serrage entre la collerette 10 du tronçon mâle 4 et la face radiale en regard de la bride d'extrémité 12 du tronçon femelle 6, évitant de ce fait tout risque de détérioration de la garniture d'étanchéité 32 qui pourrait résulter d'une compression excessive de l'élastomère. La collerette 10 et la bride d'extrémité 12 forment ainsi une butée qui limite la compression de la garniture d'étanchéité 32 et évite de ce fait son endommagement.

Le positionnement de la garniture 32 lui confère par ailleurs un effet autoclave, l'étanchéité augmentant avec la pression du fluide qui circule à l'intérieur du raccord.

Par ailleurs, l'extrémité de liaison du tronçon femelle 6 présente également un second épaulement interne 42 radialement plus intérieur que celui servant de réception à la garniture d'étanchéité torique 32, ce second épaulement 42 servant de logement à la tranche d'extrémité adjacente 40 du tronçon mâle 4 de manière à assurer un guidage en rotation du tronçon mâle 4 autour du tronçon femelle 6.

Le raccord selon l'invention est de type universel car pour chacune des extrémités libres 44, 46 des tronçons 4, 6, il existe différentes possibilités de jonction avec des éléments de canalisation adjacents. Chaque extrémité libre 44, 46 est ainsi adaptée pour permettre au choix :
- soit une jonction à brides, pour l'assemblage étanche avec un élément de canalisation équipé d'une bride terminale tel qu'un robinet-vanne par exemple ;
- soit une jonction mécanique par contre-bride rapportée, pour l'assemblage étanche, et le cas échéant verrouillé, avec un élément de canalisation à bout lisse ou uni tel qu'un tuyau par exemple ;
- soit une jonction automatique, pour l'assemblage étanche, et le cas échéant verrouillé, avec un élément de canalisation à bout lisse ou uni tel qu'un tuyau par exemple.

Plus précisément, l'extrémité libre 44, 46 de chaque tronçon 4, 6 présente deux séries d'ergots en saillie radiale vers l'extérieur qui servent au montage d'une bride amovible. En l'occurrence, la première série comporte quatre premiers ergots 48 et la seconde série comporte quatre seconds ergots 50, axialement décalés des premiers ergots vers la collerette 10 et vers la bride 12 mais alignés circonférentiellement avec ces premiers ergots 48 (voir Figure 1).

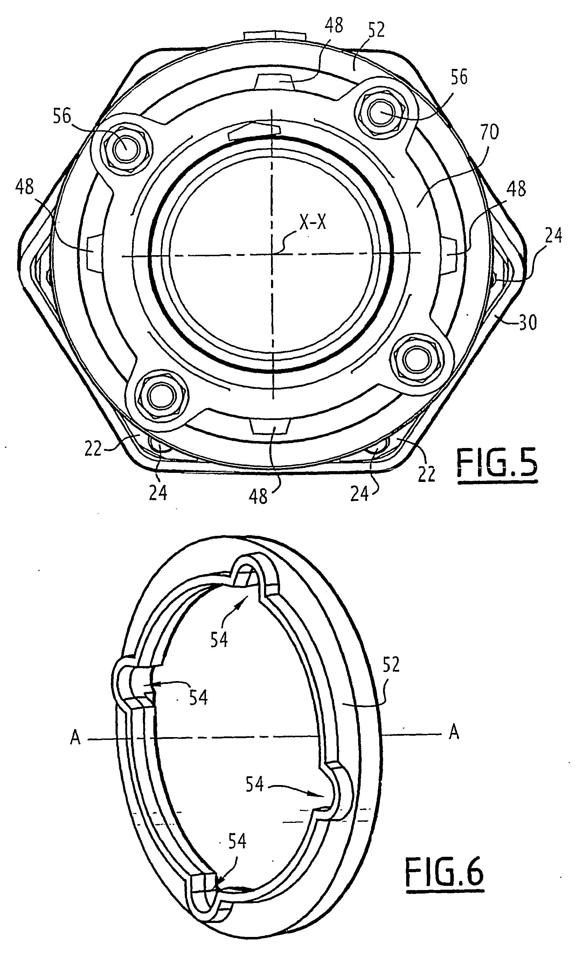

Une bride annulaire amovible 52 (Figure 6) réalisée en une matière rigide, par exemple en fonte, est munie de quatre évidements 54 radialement ouverts vers l'intérieur par rapport à son axe central propre A-A. Ces évidements 54 sont adaptés pour franchir les quatre premiers ergots 48, en vue d'un montage du type à baïonnette, et pour recevoir par la suite des boulons 56 pour l'assemblage de la bride amovible 52 avec une bride fixe ou amovible (jonction à brides) ou avec une contre-bride mobile (jonction mécanique) d'un élément de canalisation adjacent. Le montage est fait de la manière suivante. Après avoir franchi les quatre premiers ergots 48, la bride amovible 52 est pivotée autour de l'axe A-A jusqu'à ce que les évidements 54 ne coïncident plus avec les quatre premiers ergots 48, les seconds ergots 50 formant une butée axiale et assurant alors le maintien en place de la bride 52 dans cette position décalée, en empêchant celle-ci de glisser vers la partie centrale du raccord 2. Enfin, on introduit les boulons 56 à travers les évidements 54 de la bride amovible 52 de manière à solidariser celle-ci avec l'extrémité libre 44 ou 46 du raccord.

La bride amovible 52 ne peut alors plus être démontée tant que les boulons 56 sont en place dans les évidements 54.

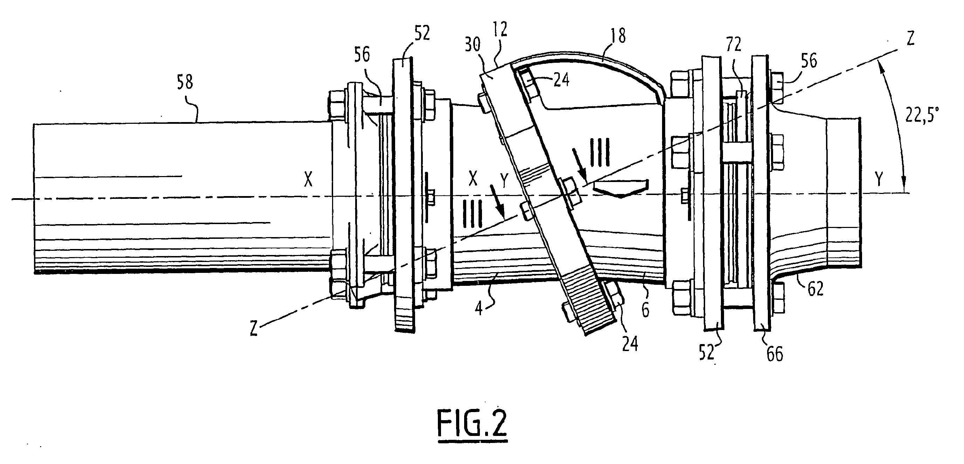

Les Figures 2 et 4 montrent un exemple de réalisation dans lequel le raccord 2 est dans sa configuration alignée, de telle sorte que les axes X-X, Y-Y des deux tronçons 4, 6 sont confondus. L'extrémité libre 44 du tronçon 4 est raccordée au bout uni d'un élément de canalisation 58 par une jonction mécanique 60. L'extrémité libre 46 du tronçon 6 est raccordée à un élément de canalisation 62 par une jonction à brides 64. L'élément 62, tel qu'un robinet-vanne ou un raccord à brides, n'est représenté que partiellement sur la Figure 2, et est muni d'une bride d'assemblage fixe 66.

Dans le cas de la jonction mécanique 60 de la Figure 4, l'étanchéité est obtenue par l'intermédiaire d'une garniture d'étanchéité 68 en élastomère comprimée entre la surface externe du bout uni de l'élément 58, la tranche de l'extrémité 44 du raccord 2 et la surface tronconique interne d'une contre-bride 70 réalisé en un matériau rigide, notamment en fonte, entourant le bout uni de l'élément 58. La contre-bride 70 est reliée à la bride amovible 52 du raccord 2 par l'intermédiaire des boulons 56 dont le serrage permet de rapprocher axialement la contre-bride 70 du raccord 2, et ainsi de comprimer la garniture d'étanchéité 68.

Dans le cas de la jonction à brides 64, une bague d'étanchéité plate 72 en élastomère est interposée entre la tranche de l'extrémité 46 du raccord 2 et la bride d'assemblage fixe 66 solidaire de l'élément de canalisation 62 à assembler, et l'étanchéité de l'assemblage est obtenue par compression axiale de cette bague 72 lors du serrage des boulons 56 qui relient la bride d'assemblage fixe 66 de l'élément de canalisation 62 à la bride amovible 52 du raccord 2.

Sur la vue en coupe de la Figure 4 sont visibles également, aux deux extrémités 44, 46 du raccord 2, des gorges intérieures 76, 78 destinées à recevoir, en vue d'une jonction automatique, une garniture d'étanchéité, non représentée, équipée le cas échéant d'inserts de verrouillage.

L'introduction du bout uni de l'élément 58 dans l'extrémité 44 du raccord 2 équipée d'une telle garniture d'étanchéité provoque alors la compression radiale de l'élastomère, assurant ainsi l'étanchéité de la jonction. Si en plus de l'étanchéité, on veut aussi assurer le verrouillage de la jonction automatique, il suffit alors de remplacer la garniture d'étanchéité classique par une garniture équipée d'inserts de verrouillage noyés dans l'élastomère et intérieurement dentés, une telle garniture étant connue en soi (voir par exemple EP 526 373) ; en venant mordre dans la surface externe du bout uni, les inserts métalliques empêchent la séparation du bout uni et du raccord sous l'action de forces axiales tendant à disjoindre ces deux éléments.

En variante, si on souhaite verrouiller la jonction mécanique, il suffit alors de remplacer la garniture d'étanchéité par une garniture munie d'inserts métalliques de verrouillage destinés à venir mordre dans la surface externe du bout uni. Avantageusement, la contre-bride 70 englobant la garniture d'étanchéité peut être montée en attente sur le raccord, obtenant ainsi un dispositif « prêt à poser » ; il suffira ensuite sur chantier d'insérer l'extrémité à bout uni dans le raccord, puis de procéder au serrage final des boulons afin de rendre la jonction étanche, facilitant de ce fait grandement le montage du raccord.

En variante, on peut remplacer l'une des brides amovibles 52 du raccord 2 par une bride fixe solidaire de l'une des extrémités libres 44, 46 du raccord, permettant de réaliser des jonctions mécaniques, verrouillées ou non, ainsi que des jonctions à brides. La solution à bride amovible est cependant avantageuse car elle offre la possibilité, par pivotement de la bride amovible dans une plage angulaire délimitée par deux premiers ergots successifs, d'aligner la position des orifices de la bride amovible avec ceux de la bride d'extrémité adjacente d'un élément de canalisation nécessitant d'être positionné de manière précise dans le sol, tel qu'un robinet-vanne dont la tige de manoeuvre doit être sensiblement verticale, permettant ainsi d'affiner le réglage de la position du raccord par rapport à la position de l'élément de canalisation adjacent.

En l'occurrence, dans l'exemple de réalisation décrit, les premiers ergots 48 sont espacés de 80° environ et la bride amovible 52 peut par conséquent subir une rotation de 80° environ autour de son axe central A-A, permettant ainsi par exemple de faire coïncider les évidements 54 de la bride amovible 52 avec les trous de passage de boulons ménagés dans la bride fixe solidaire de l'extrémité d'un élément de canalisation adjacent.

De ce fait, en plus de la liberté de rotation sur 360° d'un tronçon tubulaire 4, 6 par rapport à l'autre offerte par la liaison centrale entre ces deux tronçons 4, 6, le fait que la bride amovible 52 puisse pivoter librement dans une plage angulaire significative autour d'une des extrémités libres au moins du raccord augmente encore davantage les possibilités d'assemblage et d'ajustement du raccord avec un élément de canalisation adjacent nécessitant d'être placé dans une position bien précise.

## Revendications

1. Raccord tubulaire à angle variable, du type comprenant :
- un premier tronçon tubulaire (4) qui définit un premier axe central (X-X) et qui comporte une collerette (10) oblique par rapport au premier axe central (X-X),
- un second tronçon tubulaire (6) qui définit un second axe central (Y-Y) et qui comporte une bride d'extrémité (12) oblique par rapport au second axe central (Y-Y),
la collerette (10) et la bride d'extrémité (12) formant un axe de rotation (Z-Z), ainsi que
- des moyens de serrage (8) de la collerette contre la bride d'extrémité (12) qui sont adaptés pour permettre une rotation relative de la collerette (10) et de la bride d'extrémité (12) de 360° autour de l'axe de rotation (Z-Z), **caractérisé en ce que** l'un au moins des tronçons tubulaires (4, 6) comporte une extrémité libre (44, 46) munie d'au moins une première série d'ergots (48) en saillie radialement vers l'extérieur par rapport à l'axe central de ce tronçon tubulaire, ledit tronçon tubulaire (4, 6) comportant une bride amovible (52) qui est munie d'un évidement (54) de passage pour chacun des ergots (48) de la première série d'ergots et qui est destinée à l'assemblage du raccord (2) avec un élément de canalisation adjacent (58, 62) par une jonction du type mécanique ou par une jonction à brides, **en ce que** ladite bride amovible (52) peut pivoter dans une plage angulaire délimitée par deux premiers ergots (48) successifs,
**en ce que** chaque évidement (54) est destiné à recevoir un organe de liaison, pour l'assemblage de la bride amovible (52) avec une contre-bride (70) ou avec une bride (66) de l'élément de canalisation adjacent (58, 60),
**en ce que** le raccord tubulaire comporte l'organe de liaison **en ce que** l'organe de liaison est un boulon (56).

2. Raccord tubulaire à angle variable selon la revendication 1, **caractérisé en ce que** l'extrémité libre (44, 46) comporte en outre une seconde butée disposée entre la première série d'ergots (48) et la collerette (10) ou la bride d'extrémité (12), notamment une seconde série d'ergots (50) alignés circonférentiellement avec les ergots (48) de la première série d'ergots.

3. Raccord tubulaire à angle variable selon la revendication 1 ou 2, **caractérisé en ce qu'**il comporte une configuration alignée dans laquelle les premier (X-X) et second (Y-Y) axes sont confondus et une configuration coudée dans laquelle les premier (X-X) et second (Y-Y) axes sont sécants.

4. Raccord tubulaire à angle variable selon l'une quelconque des revendications précédentes, **caractérisé en ce que** les moyens de serrage (8) comportent au moins un segment de liaison (22) adapté pour s'appliquer contre une surface de la collerette (10) tournée à l'opposé de la bride d'extrémité (12) et au moins un organe de serrage, notamment une vis (24), adapté pour serrer le ou chaque segment de liaison (22) contre la collerette (10), la bride d'extrémité (12) comportant des orifices traversants (20), à travers lesquels s'étendent les organes de serrage (24), la bride d'extrémité (12) étant fixée au second tronçon tubulaire (6), et étant notamment solidaire du second tronçon tubulaire (6), et le ou chaque organe de serrage (24) s'étendant radialement entièrement à l'extérieur de la collerette (10) par rapport à l'axe de rotation (Z-Z).

5. Raccord tubulaire à angle variable selon l'une quelconque des revendications précédentes, **caractérisé en ce que** la bride d'extrémité (12) a une forme polygonale, notamment hexagonale.

6. Raccord tubulaire à angle variable selon les revendications 4 et 5, **caractérisé en ce que** le ou chaque segment de liaison (22) a une forme de polygone partiel complémentaire de la forme polygonale de la bride d'extrémité (12).

7. Raccord tubulaire à angle variable selon l'une quelconque des revendications 4 à 6, **caractérisé en ce que** le ou chaque segment de liaison (22) a une épaisseur (E) qui est supérieure à l'épaisseur (e) de paroi de la bride d'extrémité (12).

8. Raccord tubulaire à angle variable selon l'une quelconque des revendications précédentes, **caractérisé en ce que** la bride d'extrémité (12) comporte une jupe (30) entourant au moins partiellement les moyens de serrage (8) et la collerette (10).

9. Raccord tubulaire à angle variable selon l'une quelconque des revendications précédentes, **caractérisé en ce qu'**il comporte des moyens d'affichage (29A, 29B) adaptés pour indiquer la position relative entre les premier (X-X) et second (Y-Y) axes centraux.

10. Raccord tubulaire à angle variable selon la revendication 9, **caractérisé en ce que** les moyens d'affichage sont formés par une échelle (29A) fixe par rapport au second tronçon tubulaire (6) et un organe indicateur (29B) fixé au premier tronçon tubulaire (4).

11. Raccord tubulaire à angle variable selon l'une quelconque des revendications précédentes, **caractérisé en ce qu'**il comporte une garniture d'étanchéité (32) disposée entre le premier tronçon tubulaire (4) et le second tronçon tubulaire (6), et **en ce qu'**il comporte une première butée adaptée pour limiter la compression de la garniture d'étanchéité (32).

12. Raccord tubulaire à angle variable selon l'une quelconque des revendications précédentes, **caractérisé en ce que** le premier tronçon tubulaire (4) comporte une nervure de guidage (40) coaxiale au premier axe central (X-X), et **en ce que** le second tronçon tubulaire (6) comporte un épaulement (42) complémentaire à la nervure de guidage (40) et recevant celle-ci.

13. Raccord tubulaire à angle variable selon l'une quelconque des revendications précédentes, **caractérisé en ce qu'**il comporte une poignée de préhension (18), et **en ce que** la bride d'extrémité (12) comporte un bord rectiligne (16) qui est situé, radialement par rapport au second axe central (Y-Y), à l'opposé de la poignée de préhension.

## Claims

1. Variable-angle tubular connection, of the type comprising:
- a first tubular section (4) which defines a first central axis (X-X) and which comprises a flange ring (10) oblique to the first central axis (X-X),
- a second tubular section (6) which defines a second central axis (Y-Y) and which comprises an end flange (12) oblique to the second central axis (Y-Y),
the flange ring (10) and the end flange (12) forming an axis of rotation (Z-Z), and also
- clamping means (8) of the flange ring against the end flange (12) which are suitable for allowing a relative rotation of the flange ring (10) and the end flange (12) of 360° about the axis of rotation (Z-Z), **characterised in that** at least one of the tubular sections (4, 6) comprises a free end (44, 46) equipped with at least a first series of pins (48) projecting radially outwards in relation to the central axis of this tubular section, said tubular section (4, 6) comprising a removable flange (52) which is equipped with a passage recess (54) for each of the pins (48) of the first series of pins and which is designed for assembly of the connection (2) with an adjacent tubing element (58, 62) by a mechanical-type junction or by a flange junction, **in that** said removable flange (52) can pivot within an angular range delimited by two first successive pins (48), **in that** each recess (54) is designed to receive a linking component, for assembly of the removable flange (52) with a mating flange (70) or with a flange (66) of the adjacent tubing element (58, 60), **in that** the tubular connection comprises the linking component, and **in that** the linking component is a bolt (56).

2. Variable-angle tubular connection according to claim 1, **characterised in that** the free end (44, 46) also comprises a second end stop arranged between the first series of pins (48) and the flange ring (10) or the end flange (12), in particular a second series of pins (50) aligned circumferentially with the pins (48) of the first series of pins.

3. Variable-angle tubular connection according to claim 1 or 2, **characterised in that** it comprises an aligned configuration in which the first (X-X) and second (Y-Y) axes are coaxial and an elbowed configuration in which the first (X-X) and second (Y-Y) axes intersect.

4. Variable-angle tubular connection according to any one of the preceding claims, **characterised in that** the clamping means (8) comprise at least one linking segment (22) suitable for being applied against a surface of the flange ring (10) facing away from the end flange (12) and at least one clamping component, in particular a screw (24), suitable for clamping the or each linking segment (22) against the flange ring (10), the end flange (12) comprising traversing orifices (20), through which the clamping components (24) extend, the end flange (12) being fixed to the second tubular section (6), and being in particular integral with the second tubular section (6), and the or each clamping component (24) being radially located entirely outside the flange ring in relation to the axis of rotation (Z-Z).

5. Variable-angle tubular connection according to any one of the preceding claims, **characterised in that** the end flange (12) has a polygonal shape, in particular hexagonal.

6. Variable-angle tubular connection according to claim 4 and claim 5, **characterised in that** the or each linking segment (22) has the form of a part polygon complementary to the polygonal form of the end flange (12).

7. Variable-angle tubular connection according to any one of claims 4 to 6, **characterised in that** the or each linking segment (22) has a thickness (E) which is greater than the thickness (e) of the wall of the end flange (12).

8. Variable-angle tubular connection according to any one of the preceding claims, **characterised in that** the end flange (12) comprises a skirt (30) at least partially surrounding the clamping means (8) and the flange ring (10).

9. Variable-angle tubular connection according to any one of the preceding claims, **characterised in that** it comprises display means (29A, 29B) suitable for indicating the relative position between the first (X-X) and second (Y-Y) central axes.

10. Variable-angle tubular connection according to claim 9, **characterised in that** the display means are formed by a scale (29A) which is fixed in relation to the second tubular section (6) and an indicator component (29B) fixed to the first tubular section (4).

11. Variable-angle tubular connection according to any one of the preceding claims, **characterised in that** it comprises a gasket (32) arranged between the first tubular section (4) and the second tubular section (6), and **in that** it comprises a first end stop suitable for limiting compression of the gasket (32).

12. Variable-angle tubular connection according to any one of the preceding claims, **characterised in that** the first tubular section (4) comprises a guide rib (40) coaxial to the first central axis (X-X), and **in that** the second tubular section (6) comprises a shoulder (42) complementary to the guide rib (40) and receiving said guide rib.

13. Variable-angle tubular connection according to any one of the preceding claims, **characterised in that** it comprises a grasping handle (18), and **in that** the end flange (12) comprises a rectilinear edge (16) which is situated, radially in relation to the second central axis (Y-Y), opposite the grasping handle.

## Patentansprüche

1. Rohrverbindung mit variablem Winkel des Typs, der umfasst:
- einen ersten Rohrabschnitt (4), der eine erste Mittelachse (X-X) definiert und der einen in Bezug auf die erste Mittelachse (X-X) schräg liegenden Flanschring (10) aufweist,
- einen zweiten Rohrabschnitt (6), der eine zweite Mittelachse (Y-Y) definiert und der einen in Bezug auf die zweite Mittelachse (Y-Y) schräg liegenden Endflansch (12) aufweist,
wobei der Flanschring (10) und der Endflansch (12) eine Rotationsachse (Z-Z) bilden, sowie
- Mittel (8) zum Verspannen des Flanschrings gegen den Endflansch (12), die ausgebildet sind, eine relative Rotation des Flanschringes (10) und des Endflansches (12) um 360° um die Rotationsachse (Z-Z) zu gestatten,
**dadurch gekennzeichnet,**
**dass** mindestens einer der Rohrabschnitte (4, 6) ein freies Ende (44, 46) aufweist, das mit mindestens einer ersten Reihe von Ansätzen (48) ausgestattet ist, die radial in Bezug auf die Mittelachse dieses Rohrabschnitts nach außen hervorspringen, wobei der Rohrabschnitt (4, 6) einen lösbaren Flansch (52) aufweist, der mit einer Ausnehmung (54) für den Durchgang jedes Vorsprungs (48) der ersten Reihe von Vorsprüngen versehen ist und der für die Zusammenfügung der Verbindung (2) mit einem angrenzenden Leitungselement (58, 62) durch eine Verbindung des mechanischen Typs oder durch eine Flanschverbindung vorgesehen ist,
**dass** der lösbare Flansch (52) in einem von zwei ersten aufeinanderfolgenden Vorsprüngen (48) begrenzten Winkelbereich schwenken kann,
**dass** jede Ausnehmung (54) vorgesehen ist, ein Verbindungsorgan für das Zusammenfügen des lösbaren Flansches (52) mit einem Gegenflansch (70) oder mit einem Flansch (66) des angrenzenden Leitungselements (58, 60) aufzunehmen,
**dass** der Rohranschluss das Verbindungsorgan aufweist,
**dass** das Verbindungsorgan ein Bolzen (56) ist.

2. Rohrverbindung mit variablem Winkel nach Anspruch 1, **dadurch gekennzeichnet, dass** das freie Ende (44, 46) außerdem einen zweiten Anschlag aufweist, der zwischen der ersten Reihe von Vorsprüngen (48) und dem Flanschring (10) oder dem Endflansch (12) angeordnet ist, insbesondere eine zweite Reihe von Vorsprüngen (50), die umfangsmäßig mit den Vorsprüngen (48) der ersten Reihe von Vorsprüngen ausgerichtet ist.

3. Rohrverbindung mit variablem Winkel nach Anspruch 1 oder 2, **dadurch gekennzeichnet, dass** sie eine ausgerichtete Anordnung, in der die erste (X-X) und zweite (Y-Y) Achse übereinstimmen, und eine abgewinkelte Anordnung aufweist, in der die erste Achse (X-X) und die zweite Achse (Y-Y) sich schneiden.

4. Rohrverbindung mit variablem Winkel nach einem beliebigen der vorhergehenden Ansprüche, **dadurch gekennzeichnet, dass** die Verspannungsmittel (8) mindestens ein Verbindungssegment (22), das ausgebildet ist, um sich gegen eine entgegengesetzt zum Endflansch (12) gerichtete Fläche des Flanschringes (10) anzupressen, und mindestens ein Spannorgan, insbesondere eine Schraube (24), aufweisen, das ausgebildet ist, das oder jedes Verbindungssegment (22) gegen den Flanschring (10) zu pressen, wobei der Endflansch (12) Durchgangslöcher (22) aufweist, durch die sich die Spannorgane (24) erstrecken, wobei der Endflansch (12) an dem zweiten Rohrabschnitt (6) befestigt ist und insbesondere mit dem zweiten Rohrabschnitt (6) verbunden ist und das oder jedes Spannorgan (24) sich in Bezug auf die Drehachse (Z-Z) insgesamt radial außerhalb des Flanschringes (10) erstreckt.

5. Rohrverbindung mit variablem Winkel nach einem beliebigen der vorhergehenden Ansprüche, **dadurch gekennzeichnet, dass** der Endflansch (12) eine polygonale, insbesondere hexagonale Form aufweist.

6. Rohrverbindung mit variablem Winkel nach den Ansprüchen 4 und 5, **dadurch gekennzeichnet, dass** das oder jedes Verbindungssegment (22) eine teilweise polygonale Form, komplementär zur polygonalen Form des Endflansches (12), aufweist.

7. Rohrverbindung mit variablem Winkel nach einem beliebigen der Ansprüche 4 bis 6, **dadurch gekennzeichnet, dass** das oder jedes Verbindungssegment (22) eine Dicke (E) aufweist, die größer als die Dicke (e) der Wand des Endflansches (12) ist.

8. Rohrverbindung mit variablem Winkel nach einem beliebigen der vorhergehenden Ansprüche, **dadurch gekennzeichnet, dass** der Endflansch (12) eine Verkleidung (30) aufweist, die mindestens teilweise die Verspannungsmittel (8) und den Flanschring (10) umfasst.

9. Rohrverbindung mit variablem Winkel nach einem beliebigen der vorhergehenden Ansprüche, **dadurch gekennzeichnet, dass** sie Anzeigemittel (29A, 29B) aufweist, die geeignet sind, um die relative Position zwischen der ersten (X-X) und der zweiten (Y-Y) Mittelachse anzuzeigen.

10. Rohrverbindung mit variablem Winkel nach Anspruch 9, **dadurch gekennzeichnet, dass** die Anzeigemittel durch eine Skala (29A), die in Bezug auf den zweiten Rohrabschnitt (6) fest ist, und ein Anzeigeorgan (29B) gebildet werden, das an dem ersten Rohrabschnitt (4) befestigt ist.

11. Rohrverbindung mit variablem Winkel nach einem beliebigen der vorhergehenden Ansprüche, **dadurch gekennzeichnet, dass** sie eine Dichtung (32) aufweist, die zwischen dem ersten Rohrabschnitt (4) und dem zweiten Rohrabschnitt (6) angeordnet ist, und dass sie einen ersten Anschlag aufweist, der ausgebildet ist, die Kompression der Dichtung (32) zu begrenzen.

12. Rohrverbindung mit variablem Winkel nach einem beliebigen der vorhergehenden Ansprüche, **dadurch gekennzeichnet, dass** der erste Rohrabschnitt (4) einen Führungssteg (40) koaxial zur ersten Mittelachse (X-X) aufweist, und dass der zweite Rohrabschnitt (6) einen zum Führungssteg (40) komplementären Absatz (42) aufweist, der den Steg aufnimmt.

13. Rohrverbindung mit variablem Winkel nach einem beliebigen der vorhergehenden Ansprüche, **dadurch gekennzeichnet, dass** sie einen Haltegriff (18) aufweist und dass der Endflansch (12) einen geradlinigen Rand (16) aufweist, der in Bezug auf die zweite Mittelachse (Y-Y) radial gegenüber dem Haltegriff angeordnet ist.
